# EUROPÄISCHE PATENTSCHRIFT

(11) **EP 1 198 871 B1**
(45) Veröffentlichungstag und Bekanntmachung des Hinweises auf die Patenterteilung: **25.01.2006**
(21) Anmeldenummer: 00954490.9
(22) Anmeldetag: 13.07.2000
(51) Int. Cl.: H02H 7/08, F04D 15/00, F04D 27/02, F04B 49/06, H02H 7/093

(54) **STÖRUNGSÜBERWACHUNG EINER DURCH EINEN ELEKTRISCHEN MOTOR ANGETRIEBENEN ARBEITSMASCHINE**
MALFUNCTION DETECTION OF A MACHINE DRIVEN BY AN ELECTRIC MOTOR
CONTROLE DE DEFAUT D'UNE MACHINE ENTRAINEE PAR UN MOTEUR ELECTRIQUE

(30) Priorität: 04.08.1999 DE 19936023; 11.04.2000 DE 10017861
(43) Veröffentlichungstag der Anmeldung: 24.04.2002
(73) Patentinhaber: KSB Aktiengesellschaft, 67227 Frankenthal (DE)
(72) Erfinder: KRAMER, Markus, D-97357 Stadelschwarzach (DE); KÖHLER, Bernd, D-66969 Lemberg (DE); PETTERS, Wolfgang, D-67245 Lambsheim (DE)
(86) Internationale Anmeldenummer: PCT/EP2000/006676
(87) Internationale Veröffentlichungsnummer: WO 2001/011748

(56) Entgegenhaltungen:
- WO-A1-98/04835
- WO-A1-99/61964
- DE-A1- 19 628 054
- US-A- 4 518 318
- US-A- 4 703 387
- DATABASE WPI Section Ch, Week 199622, Derwent Publications Ltd., London, GB; Class H01, AN 1996-210687, XP002152300 -& DK 171 384 B1 (SVANEHOJ INT AS) 15 M{rz 1996
- DATABASE WPI Section PQ, Week 9012 Derwent Publications Ltd., London, GB; Class Q56, AN 1990-088590 XP002152301 -& NL 8 801 918 A (SHELL INT RES MIJ BV), 1. März 1990 (1990-03-01)

## Beschreibung

Die Erfindung betrifft eine Regeleinrichtung für einen elektrischen Motor mit variabler Drehzahl, wobei ein Frequenzumrichter den Motor speist, die Regeleinrichtung in Abhängigkeit von vorgegebenen und gespeicherten Regelparametern und mit Hilfe des Frequenzumrichters die Motordrehzahl verändert, die Regeleinrichtung die Motordrehzahl innerhalb vorgegebener Grenzwerte verändert und der Motor eine Arbeitsmaschine, insbesondere eine Fördereinrichtung für ein Fluid, antreibt.

Durch die WO 98/04835 ist ein Verfahren zur Regelung eines mittels eines Drehstrommotors angetriebenen Aggregates wie einer Pumpe oder eines Verdichters bekannt. Dem Drehstrommotor ist ein Frequenzumrichter vorgeschaltet, wobei im oder nach dem Frequenzumrichter eine Messung des elektrischen Stromes erfolgt. Die gemessene Stromstärke wird zur Einstellung eines Förderkennwertes herangezogen. Infolge des im Frequenzumrichter oder danach gemessenen Stromes bzw. der ermittelten elektrischen Leistung ist es möglich, den Frequenzumrichter im Sinne eines Reglers auszunutzen. Um die Stromstärke oder die elektrische Leistung in Abhängigkeit von einem Förderkennwert, wie einem Druckverlust oder einem Volumenstrom, als Parameter zur Einstellung eines Betriebspunktes eines Kennlinienfeldes heranziehen zu können, ist jedoch erst auf experimentelle oder empirische Art eine Ermittelung der Kennlinie notwendig. Diese Kennlinie kann werksseitig oder in einer eingebauten Anlage ermittelt und dann in einem Speicher des Frequenzumrichters niedergelegt werden.

Mit Hilfe von Parameteränderungen erfolgt eine Umrechnungen der ermittelten Kennlinie, um so für eine Regelung ein notwendiges Kennfeld zu erhalten. Weiter werden in dem Speicher zusätzliche Bedingungen wie: die Grenzleistungen im Hinblick auf die Leistungsfähigkeit des Motors, die Grenzleistung im Hinblick auf die erreichbare Temperatur, der Grenzstrom im Hinblick auf die Belastbarkeit der elektronischen Bauelemente und die Grenzdrehzahl im Hinblick auf die Zuverlässigkeit der Arbeitsmaschine abgelegt. Für eine untere Betriebsgrenze werden die entsprechenden Daten einer Grenzlinie ebenfalls abgespeichert. Über das Verhalten eines derart geregelten Aggregates im Bereich seiner Grenzlinie wird nur ausgeführt, daß ein Überschreiten des jeweils zulässigen Stromes bzw. der jeweils zulässigen Leistung unterbunden wird: Die Regelung innerhalb des durch die Grenzlinien vorgegebenen Kettenlinienfeldes erfolgt derart, daß nur ein maximal zulässiger Strom oder eine maximal zulässige elektrische Spannung erreicht wird, aber jeweils nicht überschritten wird. Eine solche Speicherung von Grenzkurven dient nur zur Ausführung eines Regelprozesses unter Einsparung eines Reglers. Dieses Prinzip ist nur anwendbar bei fest vorgegebenen Kombinationen von Motor und Arbeitsmaschine. Durch die einmalige experimentelle Ermittlung einer Kennlinie und deren Hochrechnung bei geänderten Parametern zu einem Kennfeld sind Fertigungstoleranzen oder geänderte Einsatzbedingungen mit geänderten Arbeitsmaschinen nicht möglich.

Bei Antriebsmotoren mit veränderbarer Drehzahl muß sichergestellt werden, daß bei Störungen eine Abschaltung des Antriebes erfolgt. Die Drehzahlveränderung erfolgt im allgemeinen mit sogenannten Frequenzumrichtern und in Abhängigkeit von einem Regelsystem. Durch Veränderung der Frequenz des vom Frequenz-umrichters zur Verfügung gestellten Spannungssystems wird eine nahezu stufenlose Drehzahlregelung der Arbeitsmaschine ermöglicht.

In Anlagen, in denen mit einem solchen drehzahlgeregelten Motor ausgerüstete Arbeitsmaschinen, beispielsweise in Form von Pumpen oder Lüfter integriert sind, können durch Anlagenstörungen unzulässige Betriebszustände auftreten. Dies kann beispielsweise durch einen Rohrleitungsbruch, durch eine Fehlbedienung von Armaturen, durch eine zu geringe Fördermenge oder ähnliches zu einer Störung der Anlage führen. Unter anderem können dies Leerlauf, Trockenlauf oder Unterschreitung einer vorgegebenen Mindestfördermenge sein.

Bei mit einem Fördermedium gefüllten Anlagen ist es zum Beispiel bekannt, Sensoren zu integrieren, mit deren Hilfe die Durchflussmenge oder das Vorhandensein eines Fluides registriert wird. Bei Unterschreitung vorgegebener Werte wird dann mit Hilfe eines vom Sensor gelieferten Signals eine Abschaltung des Antriebsmotors bewirkt. Die Verwendung solcher Sensoren stellt jedoch einen erheblichen zusätzlichen Aufwand dar, verbunden mit aufwendigen analytischen Maßnahmen zur Ermittlung der Anlagenbedingungen sowie den Einsatz zusätzlicher Bauteile zur Gewährleistung der Abschaltfunktion. Derartige Bauteile bilden jedoch ein Gefährdungspotential für die Betriebssicherheit eines solchen Motors.

Der Erfindung liegt das Problem zugrunde, für durch drehzahlvariable Motoren angetriebene Arbeitsmaschinen und durch diese versorgte Anlagen oder Systeme eine zuverlässige Störungsüberwachung sicherzustellen.

Die Lösung dieses Problems sieht eine Einrichtung nach den Merkmalen von Anspruch 1 und ein Verfahren nach den Merkmalen von Anspruch 5 vor.

Mit einersolchen Einrichtung ist eine Störungsüberwachung dadurch gegeben, daß auf den elektrischen Motor mit variabler Drehzahl eine Regeleinrichtung einwirkt, welche mit Hilfe einer vorherigen Lernfunktion Betriebswerte erfaßt. Die Speicherung der Betriebswerte aktiviert eine Einrichtung zur Störungsüberwachung. Bei einer durch Vergleich registrierten Störung erfolgt eine Abschaltung des Motors. Die Störungsüberwachung wird vorzugsweise für eine durch einen elektrischen Motor angetriebene Fördereinrichtung für ein Fluid und/oder eine durch die Fördereinrichtung versorgte Anlage verwendet.

Das Verfahren zum Betrieb der erfindungsgemäßen Einrichtung sieht vor, daß die Regeleinrichtung in einer Lernfunktion alle für den Motor, die Arbeitsmaschine und/oder für die von der Arbeitsmaschine versorgten Anlage möglichen Betriebszustände durchfährt, daß die während der Lernfunktion erfaßten Betriebswerte des Motors in ihrer Zuordnung zu der durch den Motor angetriebenen Arbeitsmaschine und/oder zu der Anlage vorgehalten werden und daß nach einer Speicherung der während der Lernfunktion erfaßten Betriebswerte eine Störungsüberwachung aktiviert wird. Die Lernfunktion kann innerhalb einer für den Einsatz der Fördereinrichtung spezifischen Anlage erfolgen.

Nach Speicherung der in der Lernfunktion erfaßten Betriebswerte wird die Einrichtung zur Störungsüberwachung aktiviert. Diese führt entweder einen ständigen oder periodischen Vergleich des Betriebszustandes mit den während der Lernfunktion erfaßten Betriebswerten durch.

Beim einem Betrieb mit einem aktiviertem Leerlauf-, Trockenlauf- und/oder Mindestmengenschutz erfolgt ein Vergleich der aktuellen Betriebsdaten des Motors mit den beim Lernprozeß gespeicherten Werten. Bei Erreichen und/oder Unterschreiten dieser gespeicherten Werte schaltet der Motor ab.

Die Daten der Betriebszustände können in verschiedener Form erfaßt und gespeichert werden: sie können als analoge oder digitale Werte, als eine oder mehrere Kurven, Diagramme oder in Form von Tabellen erfaßt und gespeichert werden.

Empfehlenswert bei der Verwendung eines solchen Motors für Fördereinrichtungen ist es, daß die Lernfunktion bei einem Betrieb mit Nullfördermenge erfolgt. Dadurch kann in einfacher Weise bei einem Vergleich solcher gespeicherter Werte mit den aktuellen Werten der Betriebszustände ein Fehler in einer Fördereinrichtung ohne zusätzliche Bauteile erkannt werden.

Schließlich wird empfohlen, bei Fördereinrichtungen die Einrichtung zur Störungsüberwachung für den Trockenlaufschutz und zur Sicherung gegen die Unterschreitung einer vorgegebenen Mindestfördermenge zu nutzen. Das Verfahren kann auch bei anderen Arbeitsmaschinen als Schutz gegen unzulässige Betriebszustände genutzt werden. So kann beispielsweise die Unterschreitung einer vorgegebenen Mindestlast verhindert werden. Beispielsweise bei einem Lernprozess in einem abgesperrten Fördersystem, also bei einer Nullfördermenge, auch als ein Betrieb gegen geschlossenen Schieber bekannt, wird von einer Arbeitsmaschine in Form einer Pumpe keine Menge gefördert. Es wird bei diesem Lernprozeß jedoch registriert, welche Leistung vom Antriebsmotor an die Arbeitsmaschine abgegeben wird. Die beim Lernprozess durchlaufenen Drehzahlbereiche werden mit den entsprechenden Leistungsabgaben erfasst und gespeichert.

Der in seiner Drehzahl regelbare Motor fährt mit der angeschlossenen Arbeitsmaschine einen Drehzahlbereich ab, der zwischen der Drehzahl Null bzw. der Last Null und/oder bis zu einer vorgegebenen Maximaldrehzahl bzw. einer vorgegebenen Lastgrenze des Motors reicht. Bei einem solchen Durchfahren eines Drehzahlbandes ermittelt die Regeleinrichtung die Drehzahlwerte sowie die an die angeschlossene Arbeitsmaschine abgegebenen Leistungswerte. Diese Werte werden erfasst, zugeordnet und gespeichert. Die Regeleinrichtung, die ein selbständiges Bauteil, Bestandteil eines Motors oder Bestandteil eines elektrischen Frequenzumformers sein kann, vergleicht im laufenden Betrieb ständig die Werte des Motors. Die nach dem Lernprozeß aktivierte Störungsüberwachung verwendet die ständig erfaßten Motorwerte und vergleicht diese mit den während des Lernprozesses gespeicherten Werten. Bei Erreichen oder Unterschreiten der im Lernprozeß ermittelten Werte reagiert dann die Störungsüberwachung.

Der Lernprozess kann in einfachster Weise, z. B. bei der Installation einer solchen mit dem Motor verbundenen Arbeitsmaschine in einer Anlage oder auch bereits vor der Auslieferung bei einem Hersteller, kurzfristig durchfahren werden. Die dabei aufgenommenen Drehzahl- und Leistungswerte, die in Form von Kurven, Diagrammen, Tabellen oder dergleichen gespeichert werden, stehen dann bei einem späteren Betrieb für eine Störungsüberwachung zur Verfügung. Aufwendige Sensoren und deren entsprechende Verkabelungen sind daher nicht mehr erforderlich.

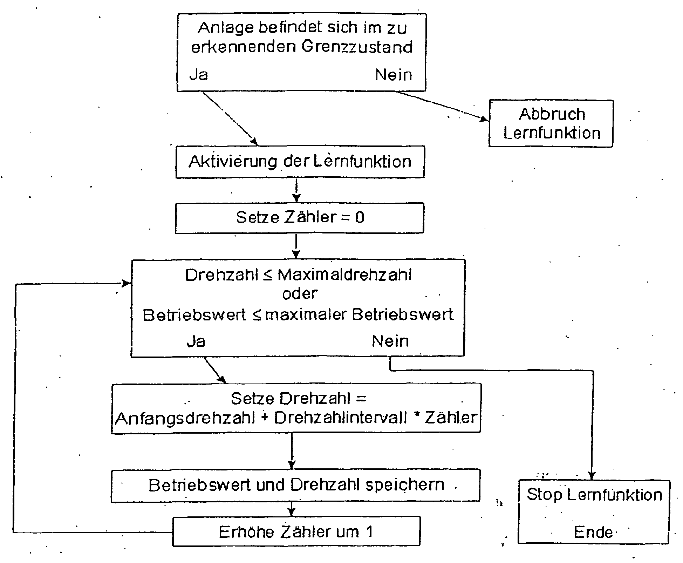

In der Figur ist die Funktion einer Lernfunktion nach Art eines Ablaufdiagrammes dargestellt. Aus Gründen der Übersichtlichkeit wurde auf die Darstellung der datenverarbeitenden Elemente verzichtet.

Eine den Motor beeinflussende Regeleinrichtung erfasst die Betriebswerte der Maschine. In der Lernfunktion registriert die Regeleinrichtung, ob sich die Anlage in einem, einem Grenzzustand entsprechenden Betriebszustand befindet. Die für die jeweilige Anlage notwendigen Regelwerte werden vom Hersteller vorgegeben oder bei einer Inbetriebnahme in die Regeleinrichtung eingegeben. Dabei wird auch der Grenzzustand eingegeben oder vorgegeben, den es später in einer Anlage zu erfassen gilt. In Fluidtransportsystemen, in denen eine geregelte Pumpe eingesetzt ist, stellt ein Pumpenbetrieb gegen einen auf der Druckseite befindlichen, geschlossenen Schieber einen solchen Grenzzustand dar.

Erkennt die Regeleinrichtung, daß sich die Anlage nicht in einem Grenzzustand befindet, dann wird die Lernfunktion abgebrochen. Dagegen wird beim Vorhandensein eines Grenzzustandes automatisch die Lernfunktion aktiviert. Dazu erfolgt eine Nullstellung eines internen Zählers und es wird festgestellt, ob die Drehzahl des Motors gleich oder kleiner einer vorgegebenen Maximaldrehzahl ist. Oder ob derjenige Betriebswert, den es zu überwachen gilt, gleich oder kleiner eines maximalen Betriebswertes ist. Der Betriebswert kann beispielsweise eine zu überwachende Leistung sein. Um eine Zerstörung einer zu überwachenden Maschine auszuschließen, darf auch bei der Lernfunktion ein maximaler Leistungswert nicht überschritten werden.

Befinden sich die zu überwachenden Werte oberhalb der Maximaldrehzahl oder oberhalb eines maximalen Betriebswertes, so wird die Lernfunktion beendet. Befinden sich dagegen die zu überwachenden Werte unterhalb eines vorgegebenen Maximalwertes, so wird ein Sollwert gesetzt. Der Sollwert ergibt sich aus einem Anfangswert, zu dem das Produkt addiert wird, welches sich aus der Multiplikation von einem Intervallwert mit dem jeweiligen Zählerwert ergibt. Ein so ermittelter Sollwert oder Betriebswert wird gespeichert. In der Zeichnung ist als Beispiel für einen Sollwert die Drehzahl aufgeführt. Die im Ablaufdiagramm beispielhaft verwendete gesetzte Drehzahl setzt sich zusammen aus einer Anfangsdrehzahl, zu der das Produkt aus einem Drehzahlintervall multipliziert mit einem Zählerwert addiert wird. Anstelle der Drehzahl kann auch ein Betriebswert Verwendung finden. Solche Betriebswerte sind eine Funktion der Drehzahl. Nach Ermittlung des Drehzahlwertes erfolgt die Abarbeitung einer Schleifenfunktion, bei der der Zählerwert jeweils um einen Wert erhöht wird. Dieser Vorgang erfolgt so lange, bis die ermittelten Werte dem jeweiligen Maximalwert entsprechen. Bei dessen Erreichen endet die Lernfunktion. Mit Hilfe des in der Lernfunktion zuletzt ermittelten Wertes existiert ein Drehsoll- oder Betriebswert für die jeweilige Anlage, mit dessen Hilfe eine sichere Störungsüberwachung möglich ist.

In einer Anlage sind Betriebszustände möglich, bei denen aufgrund der Drehzahlwerte oder der Betriebszustände unterschiedliche Resultate auftreten können. Es ist daher im Einzelfall zu prüfen, ob eine Lernfunktion nur mit Drehzahlwerten, nur mit Betriebswerten oder mit beiden Werten als Sollwerten durchzuführen ist.

## Patentansprüche

1. Regeleinrichtung für einen elektrischen Motor mit variabler Drehzahl, wobei ein Frequenzumrichter den Motor speist, die Regeleinrichtung in Abhängigkeit von vorgegebenen und gespeicherten Regelparametern und mit Hilfe des Frequenzumrichters die Motordrehzahl verändert, die Regeleinrichtung die Motordrehzahl innerhalb vorgegebener Grenzwerte verändert und der Motor eine Arbeitsmaschine, insbesondere eine Fördereinrichtung für ein Fluid, antreibt, **dadurch gekennzeichnet, daß** die Regeleinrichtung in einer Lernfunktion Betriebswerte des Motors erfaßt und daß eine Speicherung der erfaßten Betriebswerte eine Einrichtung zur Störungsüberwachung aktiviert.

2. Regeleinrichtung nach Anspruch 2, **dadurch gekennzeichnet, daß** eine Speicherung der Betriebswerte für einen Leerlauf-, Trockenlauf- und/oder Mindestmengenschutz die Einrichtung zur Störungsüberwachung aktiviert.

3. Regeleinrichtung nach Anspruch 1 oder 2, **dadurch gekennzeichnet, daß** die Lernfunktion bei einem Betrieb mit Nullfördermenge erfolgt.

4. Regeleinrichtung nach Anspruch 1, 2 oder 3, **dadurch gekennzeichnet, daß** die Störungsüberwachung die Unterschreitung einer vorgegebenen Mindestfördermenge und/oder einer vorgegebenen Mindestlast verhindert.

5. Verfahren zum Betrieb einer Regeleinrichtung für einen elektrischen Motor mit variabler Drehzahl, wobei werksseitig oder während einer Inbetriebnahme meßtechnische erfaßte Betriebswerte des Motor in Abhängigkeit von der angetriebenen Arbeitsmaschine und/oder von der durch die Arbeitsmaschine versorgten Anlage erfaßt und gespeichert werden, die Regeleinrichtung während des Betriebes eine Messung des vom Antriebsmotor aufgenommenen Stromes oder dessen elektrische Leistung vornimmt, **dadurch gekennzeichnet, daß** die Regeleinrichtung in einer Lernfunktion alle für den Motor, die Arbeitsmaschine und/oder für die von der Arbeitsmaschine versorgten Anlage möglichen Betriebszustände durchfährt, daß die während der Lernfunktion erfaßten Betriebswerte des Motors in ihrer Zuordnung zu der durch den Motor angetriebenen Arbeitsmaschine und/oder zu der Anlage vorgehalten werden und daß nach einer Speicherung der während der Lernfunktion erfaßten Betriebswerte eine Störungsüberwachung aktiviert wird.

6. Verfahren nach Anspruch 5, **dadurch gekennzeichnet, daß** bei einem Betrieb mit aktiviertem Leerlauf-, Trockenlauf- und/oder Mindestmengenschutz die Regeleinrichtung die aktuellen Betriebsdaten des Motors mit dem beim Lernprozeß gespeicherten Werten vergleicht und daß bei Erreichen und/oder Unterschreiten der gespeicherten Werte der Motor abgeschaltet wird.

7. Verfahren nach Anspruch 5 oder 6, **gekennzeichnet durch** einen ständigen oder periodischen Vergleich des Betriebszustandes mit den während der Lernfunktion erfaßten Betriebswerten.

8. Verfahren nach einem oder mehreren der Ansprüche 5 bis 7, **dadurch gekennzeichnet, daß** die Daten der Betriebszustände als eine Folge von digitalen oder analogen Werten erfaßt und gespeichert werden.

9. Verfahren nach einem oder mehreren der vorhergehenden Ansprüche 5 bis 8, **dadurch gekennzeichnet, daß** die Daten der Betriebszustände in Form einer oder mehrerer Kurven, Diagramme oder Tabellen erfaßt und gespeichert werden.

10. Verfahren nach einem oder mehreren der Ansprüche 5 bis 9, **dadurch gekennzeichnet, daß** die Lernfunktion bei einem Betrieb mit Nullfördermenge erfolgt.

11. Verfahren nach einem oder mehreren der Ansprüche 5 bis 10, **dadurch gekennzeichnet, daß** die Einrichtung zur Störungsüberwachung für den Trockenlaufschutz der Fördereinrichtung genutzt wird.

12. Verfahren nach einem oder mehreren der Ansprüche 5 bis 11, **dadurch gekennzeichnet, daß** die Einrichtung zur Störungsüberwachung für die Sicherung der Fördereinrichtung gegen die Unterschreitung einer vorgegebenen Mindestfördermenge genutzt wird.

13. Verfahren nach einem oder mehreren der Ansprüche 5 bis 12, daß die Einrichtung zur Störungsüberwachung zur Sicherung der Arbeitsmaschine gegen die Unterschreitung einer vorgegebenen Mindestlast genutzt wird.

## Claims

1. Control device for a variable rotation speed electric motor, with a frequency converter feeding the motor, the control device changing the motor rotation speed as a function of predetermined and stored control parameters and with the aid of the frequency converter, the control device changing the motor rotation speed within predetermined limit values, and the motor driving a process machine, in particular a feed device for a fluid, **characterized in that** the control device uses a learning function to detect operating values of the motor, and **in that** storage of the recorded operating values activates a device for fault monitoring.

2. Control device according to Claim 2, **characterized in that** storage of the operating values for no-load, dry-running and/or minimum rate protection activates the device for fault monitoring.

3. Control device according to Claim 1 or 2, **characterized in that** the learning function takes place during operation with a feed rate of zero.

4. Control device according to Claim 1, 2 or 3, **characterized in that** the fault monitoring prevents a predetermined minimum feed rate and/or a predetermined minimum load from being undershot.

5. Method for operation of a control device for a variable rotation speed electric motor, with measured operating values of the motor, which are recorded in the factory or during commissioning, being recorded and stored as a function of the driven process machine and/or of the installation that is supplied by the process machine, and with the control device carrying out a measurement of the current drawn by the drive motor or its electrical power during operation, **characterized in that** the control device passes, in a learning function, through all of the operating states which are possible for the motor, for the process machine and/or for the installation which is supplied by the process machine, **in that** the operating values of the motor which are recorded during the learning function are stored together in their association with the process machine which is driven by the motor and/or with the installation, and **in that** the fault monitoring is activated after storage of the operating values which have been recorded during the learning function.

6. Method according to Claim 5, **characterized in that**, during operation with activated no-load, dry-running and/or minimum rate protection, the control device compares the instantaneous operating data of the motor with the values stored during the learning process, and **in that** the motor is switched off on reaching and/or falling below the stored values.

7. Method according to Claim 5 or 6, **characterized by** continuous or periodic comparison of the operating state with the operating values which were recorded during the learning function.

8. Method according to one or more of Claims 5 to 7, **characterized in that** the data relating to the operating states is recorded and stored as a sequence of digital or analogue values.

9. Method according to one or more of the preceding Claims 5 to 8, **characterized in that** the data relating to the operating states is recorded and stored in the form of one or more curves, diagrams or tables.

10. Method according to one or more of Claims 5 to 9, **characterized in that** the learning function takes place during operation with a feed rate of zero.

11. Method according to one or more of Claims 5 to 10, **characterized in that** the device for fault monitoring is used for dry-running protection of the feed device.

12. Method according to one or more of Claims 5 to 11, **characterized in that** the device for fault monitoring is used to protect the feed device against falling below a predetermined minimum feed rate.

13. Method according to one or more of Claims 5 to 12, **characterized in that** the device for fault monitoring is used to protect the process machine against falling below a predetermined minimum load.

## Revendications

1. Dispositif de régulation pour un moteur électrique à vitesse variable, un convertisseur de fréquence alimentant le moteur, le dispositif de régulation modifiant la vitesse de rotation du moteur en fonction de paramètres de régulation prédéfinis et enregistrés et à l'aide du convertisseur de fréquence, le dispositif de régulation modifiant la vitesse de rotation du moteur au sein de valeurs limites prédéfinies et le moteur entraînant une machine de production, notamment un dispositif de transport d'un fluide, **caractérisé en ce que** le dispositif de régulation acquiert des valeurs de fonctionnement du moteur dans une fonction d'apprentissage et qu'un enregistrement des valeurs de fonctionnement acquises active un dispositif de surveillance des défauts.

2. Dispositif de régulation selon la revendication 2, **caractérisé en ce qu'**un enregistrement des valeurs de fonctionnement active le dispositif de surveillance des défauts pour une protection contre un fonctionnement à vide, un fonctionnement à sec et/ou une quantité minimale.

3. Dispositif de régulation selon la revendication 1 ou 2, **caractérisé en ce que** la fonction d'apprentissage est exécutée lors d'un fonctionnement avec une quantité transportée nulle.

4. Dispositif de régulation selon la revendication 1, 2 ou 3, **caractérisé en ce que** la surveillance des défauts empêche que la quantité transportée et/ou la charge ne devienne inférieure à un niveau minimum prédéfini.

5. Procédé de mise en oeuvre d'un dispositif de régulation pour un moteur électrique à vitesse variable, les valeurs de fonctionnement du moteur acquises par métrologie en usine ou pendant une mise en service étant acquises et enregistrées en fonction de la machine de production entraînée et/ou de l'équipement alimenté par la machine de production, le dispositif de régulation effectuant pendant le fonctionnement une mesure du courant consommé par le moteur d'entraînement ou de sa puissance électrique, **caractérisé en ce que** le dispositif de régulation, au cours d'une fonction d'apprentissage, balaye tous les états de fonctionnement possibles du moteur, de la machine de production et/ou de l'équipement alimenté par la machine de production, **en ce que** les valeurs de fonctionnement du moteur acquises pendant la fonction d'apprentissage sont dérivées dans leur affectation à la machine de production entraînée par le moteur et/ou à l'équipement et **en ce qu'**un dispositif de surveillance des défauts est activé après un enregistrement des valeurs de fonctionnement acquises pendant la fonction d'apprentissage.

6. Procédé selon la revendication 5, **caractérisé en ce que** lors d'un fonctionnement avec la protection activée contre un fonctionnement à vide, un fonctionnement à sec et/ou une quantité minimale, le dispositif de régulation compare les données de fonctionnement actuelles du moteur avec les valeurs enregistrées lors du processus d'apprentissage et **en ce que** le moteur est arrêté dès qu'elles atteignent ou deviennent inférieures aux valeurs enregistrées.

7. Procédé selon la revendication 5 ou 6, **caractérisé par** une comparaison continue ou périodique de l'état de fonctionnement avec les valeurs de fonctionnement acquises pendant la fonction d'apprentissage.

8. Procédé selon une ou plusieurs des revendications 5 à 7, **caractérisé en ce que** les données des états de fonctionnement son acquises et enregistrées sous la forme d'une séquence de valeurs analogiques ou numériques.

9. Procédé selon une ou plusieurs des revendications précédentes 5 à 8, **caractérisé en ce que** les données des états de fonctionnement sont acquises et enregistrées sous la forme d'une ou de plusieurs courbes, diagrammes ou tableaux.

10. Procédé selon une ou plusieurs des revendications 5 à 9, **caractérisé en ce que** la fonction d'apprentissage est exécutée lors d'un fonctionnement avec une quantité transportée nulle.

11. Procédé selon une ou plusieurs des revendications 5 à 10, **caractérisé en ce que** le dispositif de surveillance des défauts est utilisé pour la protection contre le fonctionnement à sec du dispositif de transport.

12. Procédé selon une ou plusieurs des revendications 5 à 11, **caractérisé en ce que** dispositif de surveillance des défauts est utilisé pour la protection du dispositif de transport contre une valeur transportée qui deviendrait inférieure à un niveau minimum prédéfini.

13. Procédé selon une ou plusieurs des revendications 5 à 12, **caractérisé en ce que** dispositif de surveillance des défauts est utilisé pour la protection de la machine de production contre une charge qui deviendrait inférieure à un niveau minimum prédéfini.
